# FASCICULE DE BREVET EUROPEEN

(11) **EP 1 398 409 B1**
(45) Date de publication et mention de la délivrance du brevet: **14.07.2010**
(21) Numéro de dépôt: 03360100.6
(22) Date de dépôt: 01.09.2003
(51) Int. Cl.: D06N 5/00, C08L 95/00, C09D 195/00

(54) **Membrane d'étanchéité préfabriquée à base de liant bitumineux modifié polyuréthanne et procédé de fabrication**
Vorgefertigte Dichtungsbahn aus polyurethanmodifiziertem Bitumenbindemittel und Verfahren zu deren Herstellung
Prefabricated sealing membrane based on a polyurethane modified bitumous binder and method of manufacture

(30) Priorité: 11.09.2002 FR 0211258
(43) Date de publication de la demande: 17.03.2004
(73) Titulaire: SOPREMA, 67100 Strasbourg (FR)
(72) Inventeur: Bindschedler, Pierre Etienne, 67210 Obernai (FR); Perrin, Rémi, 67870 Bischoffsheim (FR); Schall, Corinne, 67000 Strasbourg (FR); Nouri, Arnaud, 67230 Kogenheim (FR)
(74) Mandataire: Nuss, Pierre

(56) Documents cités:
- EP-A- 0 205 769
- WO-A-00/11111
- WO-A-97/03253
- DE-A- 2 040 960
- GB-A- 1 314 352

## Description

La présente invention concerne les membranes d'étanchéité préfabriquées flexibles à base de liant bitumineux utilisé principalement pour étanchéifier les toitures des bâtiments, ouvrages d'art ou analogues, et a pour objet une telle membrane à base de liant bitumineux modifié polyuréthanne, ainsi que son procédé de fabrication.

On connaît depuis de nombreuses années, les membranes à base de bitume modifié par les polymères du type SBS (Styrène Butadiène Styrène) ou APP (= PPA : Polypropylène Atactique), qui sont largement développées depuis les années 1970 dans le secteur de l'étanchéité des toitures terrasse.

La modification des bitumes de distillation directe issus des raffineries est une nécessité. En effet, les bitumes classiques utilisés notamment dans l'industrie routière ont des points de ramollissement de l'ordre de 40° C et à partir de - 5° C sont durs et cassants comme du verre.

Or, ces températures d'utilisation sont trop limitatives pour une utilisation en toitures dans le cadre de laquelle la plage de températures en fonction des climats varie entre -40° C et 110° C.

Il est donc nécessaire de modifier le bitume. Les techniques classiques consistent en la modification par des polymères thermoplastiques de type par exemple élastomères à block [SBS, SEBS (pour Styrène Ethylène Butadiène Styrène), ...] ou plastomères [Polyoléfine du type PPA, EVA, PPI, APAO (pour α polyoléfine amorphe)].

Ainsi, par une modification SBS, on peut obtenir un liant bitumineux ayant un point de ramollissement de l'ordre de 125° C et une souplesse à basse température de l'ordre de - 30° C. La plage d'utilisation d'un liant modifié par des polymères plastomères est généralement comprise entre - 15° C et 150° C.

Toutefois, les membranes réalisées à base de liant bitumineux modifié par les polymères précités ont leurs limites : ces polymères sont sensibles aux UV et, de ce fait, la dernière couche (couche apparente) nécessite une protection spécifique supplémentaire contre l'agression des UV.

Cette protection, lorsqu'elle est intégrée à la membrane préfabriquée, est actuellement réalisée soit avec des feuillards métalliques (Aluminium, Cuivre ou inox), soit par des paillettes ou granulés d'ardoises ou de mica saupoudrées en surface lors du process de fabrication. Ces protections dites "auto-protections" amènent un surpoids pouvant aller jusqu'à 1,5 kg/m², représentant jusqu'à 30 % du poids de la membrane et renchérissent le prix de revient de la membrane finale.

Outre les UV, ces produits connus précités vieillissent rapidement par rapport à la durée de vie des ouvrages et se dégradent par oxydation, n'autorisant pas une étanchéité valable sur une longue durée. Une réfection de l'étanchéité se fait en effet en moyenne tous les 15-20 ans.

Depuis quelques années se sont développés des revêtements bitumineux modifiés polyuréthanne. Ces produits trouvent surtout une application dans les revêtements routiers et l'étanchéité des ouvrages d'art et des bâtiments. Les produits connus de ce type sont soit :
- applicables à froid : le produit se présente sous forme liquide, mono ou bicomposant, et atteint ses caractéristiques une fois réticulé.
- applicables à chaud : la polymérisation se fait dans le bitume à chaud juste avant son application sur chantier.

Par exemple, le brevet français n° 2 064 750 décrit un liant bitumineux thermoplastique contenant jusqu'à 10 % de polyuréthanne. Les polyols utilisés ont des fonctionnalités supérieures à 2, pouvant aller jusqu'à 8. Le liant conserve ses propriétés thermoplastiques du fait de la faible proportion de polymère.

Ce procédé décrit dans le brevet français précité nécessite un mélange sur chantier à des températures élevées pouvant atteindre 200°C.

Par ailleurs, par la demande de brevet européen n° 1 013 716 du 23 décembre 1999 au nom de la demanderesse, on connaît une composition liquide monocomposante à base de bitume et de polyuréthanne applicable à froid sur un support à étanchéifier.

Toutefois, les produits connus des dépôts français et européen précités ne sont pas adaptés pour la réalisation de membranes préfabriquées en usine.

Par le document WO 97/03253, on connaît un matériau en feuille destiné à former une barrière contre l'humidité et comprenant une couche d'un mélange bitume / polyuréthanne rapportée sur un film polymère et recouverte d'un film détachable.

Le film polymère assure la protection de la couche bitumineuse contre les agents extérieurs, notamment contre les U.V., et ladite couche bitumineuse présente des propriétés d'adhésivité à froid et n'est pas adaptée pour être réchauffée avant application de la feuille de matériau.

Le problème posé à la présente invention consiste à proposer une membrane d'étanchéité préfabriquée à base de liant bitumineux modifié pouvant être fabriquée de manière industrielle selon les techniques courantes d'enduction ou d'imprégnation, telles que le calandrage (éventuellement légèrement adaptées), apte à être ramollie par chauffage avant pose sans modification de ses caractéristiques, présentant une grande stabilité aux U.V. (ultra-violets) et une grande résistance à l'oxydation et au vieillissement en étant exposés aux agressions des agents atmosphériques et climatiques.

A cet effet, l'invention a pour objet une membrane d'étanchéité préfabriquée formée d'un support ou renfort, tel qu'une ou plusieurs armature(s) fibreuse(s) ou non, enduit sur au moins une face, et préférentiellement imprégnée(s) à coeur (c'est-à-dire sur toute son ou leur épaisseur), d'une composition à base de bitume modifié, caractérisé en ce que la composition bitumineuse thermoplastique d'enduction et/ou d'imprégnation est un liant bitumineux modifié par un polyuréthanne thermoplastique selon la revendication 1 présentant la formulation pondérale suivante :
- 40 à 90 % de bitume,
- 10 à 50 % de polyuréthanne thermoplastique,
- 0 à 10 % d'huile aromatique,
- 0 à 50 % de charges,
- 0 à 0,5 % de catalyseur.

L'idée à la base de l'invention consiste donc à réaliser une membrane armée à base de liant bitumineux modifiée par un polyuréthanne thermoplastique. La membrane sera préférentiellement appliquée sur chantier par soudure au chalumeau ou à l'air chaud : le produit (c'est-à-dire la composition bitumineuse thermoplastique) se ramollit sous l'action de la chaleur et retrouve toutes ses propriétés après refroidissement. La membrane pourra également être appliquée par collage total (à froid par exemple), par bandes ou par points.

Ce type de liant modifié, compte tenu de la nature chimique des polyols et isocyanates utilisés dans la synthèse du polyuréthanne, présente l'avantage d'être stable aux UV et très peu sensible à l'oxydation.

Ainsi, les molécules utilisées ne contiendront pas de double liaison carbone-carbone et les polyols utilisés ne comporteront pas de liaisons éthyléniques.

Par ailleurs, en fonction des polyols et isocyanantes utilisés et des quantités de polymère mises en oeuvre, il est possible d'obtenir des produits présentant des caractéristiques différentes, éventuellement ajustés par des additifs sélectionnés à cet effet.

La synthèse des TPU (polyuréthannes thermoplastiques) est connue de l'homme du métier et largement décrite dans la littérature spécialisée. Elle peut être réalisée soit par la voie dite "one shot" ("en une fois"), soit par la voie prépolymère.

Comme indiqué précédemment, le liant d'enduction est principalement constitué de bitume et de TPU. Il pourra également contenir des charges qui permettent de diminuer le coût, des huiles aromatiques ou naphténiques afin d'améliorer les propriétés à froid et un catalysseur ou tout autre additif permettant d'améliorer ses performances initiales : feu, résistances aux racines, adhésion.

Selon un mode de réalisation préférentiel de l'invention, la composition bitumineuse d'enduction et/ou d'imprégnation présente la formulation pondérale suivante :
- 60 à 80 % de bitume,
- 15 à 40 % de polyuréthanne thermoplastique,
- 0 à 5 %, préférentiellement 0 à 3 %, d'huile aromatique,
- 0 à 40 %, préférentiellement 0 à 20 %, de charges,
- 0 à 0,5 % de catalyseur.

En accord avec un exemple de réalisation préféré et optimisé, la formulation précitée pourra éventuellement être affinée comme suit :
- 60 à 80 % de bitume,
- 20 à 30 % de PU thermoplastique,
- 0 à 2 % d'huile aromatique,
- 10 à 20 % de charges,
- 0 à 0,2 % de catalyseur.

En outre, conformément à une caractéristique additionnelle avantageuse de l'invention, la composition bitumineuse d'enduction et/ou d'imprégnation contient également entre 0,01 et 20 % en poids d'un ou de plusieurs additifs) améliorant l'adhésivité, la résistance au feu ou aux flammes et/ou la résistance aux racines de ladite composition.

La teneur en additifs) peut varier en fonction de la ou des propriété(s) additionnelle(s) que doit présenter la composition.

Généralement, ladite teneur est de l'ordre du % en poids.

Le bitume utilisé est avantageusement un bitume de distillation directe. En fonction des caractéristiques désirées pour le liant et la membrane, on choisira un bitume plus ou moins mou. Les bitumes 70/100 et 180/220 conviennent particulièrement bien.

Le polyuréthanne thermoplastique, dont le prépolymère peut éventuellement être préparé auparavant, est obtenu à partir de diisocyanate de fonctionnalité sensiblement égale à 2, de polyol de fonctionnalité sensiblement égale à 2, et d'un agent allongeur de chaîne.

la fonctionnalité du polyol est comprise entre 1,95 et 2,05 et celle de l'isocyanate entre 2,0 et 2,1.

L'isocyanate peut être choisi parmi les isocyanates de fonctionnalité sensiblement égale à 2, préférentiellement on choisira un isocyanante aromatique par exemple un MDI ou un TDI.

Le polyol pourra être choisi parmi les polyesters, les polyéthers et les polycarbonates de fonctionnalités sensiblement égale à 2 et de masses molaires de 1000 à 5000, de préférence comprises entre 1000 et 3000. Ces polyols peuvent être utilisés seuls ou en combinaison, c'est-à-dire mélangés entre eux.

L'allongeur de chaîne est un diol de masse molaire comprise entre 50 et 500. Les allongeurs couramment employés sont le 1,4-butanediol, l'hexanediol, le néopentylglycol, le 2-éthyl, 1,3-hexanediol.

Le polyuréthanne thermolastique est avantageusement constitué d'un taux de segments durs (% en masse isocyanate + % en masse allongeur de chaîne) compris entre 10 et 40 %, préférentiellement entre 10 et 30 %, et le ratio isocyanante / polyol est compris entre 1,0 et 1,1 et se situe de préférence à environ 1,05. Le catalyseur pourra être choisi parmi les catalyseurs couramment utilisés dans la synthèse des polyuréthannes et connus de l'homme du métier.

Les charges ou "fillers" seront choisis parmi les charges minérales telles que la craie, la silice, le talc, la dolomie, le kaolin et les mélanges possibles d'au moins deux de ces substances.

La présente invention a également pour objet un procédé de fabrication industrielle d'une membrane d'étanchéité telle que décrite ci-dessus.

Selon un premier mode de réalisation d'un tel procédé, le prépolymère est synthétisé à part, dans les conditions de réaction habituelles : agitation sous atmosphère inerte pendant 45 à 120 minutes, température de 80 à 90° C. Le prépolymère est ensuite introduit dans le bitume chauffé à une température supérieure à sa température de fusion, de façon à obtenir une masse fluide et homogène. On ajoute ensuite l'agent allongeur de chaîne et en dernier, le catalyseur et éventuellement les autres composants. Suivant les polyols utilisés, la quantité de catalyseur et la température du mélange, la durée de réaction varie entre 15 et 120 minutes pendant laquelle le mélange résultant est chauffé et préférentiellemnt de manière intermittente ou éventuellement continu, jusqu'à polymérisation. La température finale du liant peut atteindre 180° C pour permettre une polymérisation complète et avoir une masse suffisamment fluide.

Selon un second mode de réalisation d'un tel procédé de fabrication, la synthèse du polyuréthanne peut se faire entièrement in-situ dans le bitume (synthèse en une seule passe). Le bitume est alors porté à sa température de fusion, préférablement à 100° C. Les polyols et isocyanantes sont ajoutés et le mélange est agité jusqu'à obtention environ du taux de NCO théorique (entre 60 et 120 minues). On ajoute alors l'agent allongeur de chaîne, le catalyseur et, le cas échéant, le restant des composants. La température du mélange final obtenu est augmentée progressivement à 180° C, avec agitation intermittente continue, pour garder une masse fluide et permettre une polymérisation complète.

Suivant le type de bitume, il se peut que celui-ci, du fait de la présence de groupes réactifs dans la fraction des asphaltènes, consomme une part d'isocyanates. Il faut alors, dans le cas de la synthèse du prépolymère dans le bitume (synthèse en une passe), tenir compte de cette réactivité et ajuster le taux d'isocyanate à mettre en oeuvre.

La composition bitumineuse modifiée chaude et fluide obtenue, qui présente une composition pondérale telle qu'évoquée ci-dessus, est alors appliquée, par exemple par enduction (par exemple avec une râcle) puis calandrage, en couche sur un support tel qu'une armature fibreuse en défilement pour l'enduire et l'imprégner. A ce stade, la température finale de la composition bitumineuse, avant application, est comprise entre 160° C et 185° C, préférentiellement entre 165° C et 180° C.

A tire d'exemple non limitatif de l'invention, on décrit ci-après en détail un possible procédé pratique de réalisation d'une membrane selon l'invention.

### Synthèse du prépolymère :

Mélanger 500 parts d'un polyester de masse molaire 3000 avec 200,75 parts de MDI monomérique, sous atmosphère d'azote et à 80/90° C pendant 90 minutes (Taux de NCO théorique : 7,63 %).

### Réalisation et application du liant modifié :

A 250 parts de bitume 180/220 chauffé à 120° C, ajouter 57,8 parts de prépolymère comme préparé précédemment. Mélanger pendant 5 minutes. Ajouter 4 parts de 1,4-BDO et mélanger pendant 5 minutes. Augmenter la température du mélange à 150° C. Ajouter 0,05 parts de DBTL et continuer à chauffer. Après 10 minutes de mélange, la température a atteint 170° C. Le mélange est retiré de la chauffe et appliqué en film de 2 mm sur l'armature support.

Des tests sont effectués pour déterminer la TBA, la pénétration à 25° C, les propriétés rhéologiques avec un balayage en température, la pliabilité à froid et les caractéristiques mécaniques par traction directe.

Les résultats de ces mesures sont les suivants :
- TBA : 150°C
- Pénétration 25 ; 54/10 mm,
- Pliabilité : - 20 °C,
- Caractéristiques mécaniques : 0,74 Mpa en force à la rupture et 200 % d'allongement,
- Rhéologie : plateau caoutchoutique entre 30 et 150° C, max tan_delta : 10° C, max G" : - 20° C
- Taux de segments durs : 34 % - NCO/OH : 1 006

Bien entendu, l'invention n'est pas limitée aux modes de réalisation décrits. Des modifications restent possibles, notamment du point de vue de la constitution des divers éléments ou par substitution d'équivalents techniques, sans sortir pour autant du domaine de protection de l'invention.

## Revendications

1. Membrane d'étanchéité préfabriquée, présentant une grande stabilité aux UV et formée d'un support ou renfort, tel qu'une ou plusieurs armature(s) fibreuse(s) ou non, enduit sur au moins une face, et préférentiellement imprégnée(s) à coeur, d'une composition à base de bitume modifié,
membrane **caractérisée :**
**en ce que** la composition bitumineuse thermoplastique d'enduction et/ou d'imprégnation est un liant bitumineux modifié par un polyuréthanne thermoplastique présentant la formulation pondérale suivante :
- 40 à 90 % de bitume,
- 10 à 50 % de polyuréthanne thermoplastique,
- 0 à 10 % d'huile aromatique,
- 0 à 50 % de charges,
- 0 à 0,5 % de catalyseur,
**en ce que** le polyuréthane thermoplastique est dépourvu de double liaison carbone-carbone et est obtenu à partir d'un diisocyanate de fonctionnalité comprise entre 2,0 et 2,1, d'un polyol de fonctionnalité comprise entre 1,95 et 2,05 et ne comportant pas de liaisons éthyléniques et d'un allongeur de chaîne, et
**en ce que** le liant bitumineux modifié est apte à être ramolli sous l'effet de la chaleur et retrouve ses propriétés après refroidissement.

2. Membrane d'étanchéité selon la revendication 1, **caractérisée en ce que** la composition bitumineuse d'enduction et/ou d'imprégnation présente la formulation pondérale suivante :
- 60 à 80 % de bitume,
- 15 à 40 % de polyuréthanne thermoplastique,
- 0 à 5 % d'huile aromatique,
- 0 à 40 % de charges,
- 0 à 0,5 % de catalyseur.

3. Membrane d'étanchéité selon l'une quelconque des revendications 1 et 2, **caractérisé en ce que** la composition bitumineuse d'enduction et/ou d'imprégnation contient également entre.0,01 et 20 % en poids d'un ou de plusieurs additif(s) améliorant l'adhésivité, la résistance au feu ou aux flammes et/ou la résistance aux racines de ladite composition.

4. Membrane d'étanchéité selon l'une quelconque des revendications 1 à 3, **caractérisée en ce que** le polyuréthanne thermoplastique est obtenu à partir d'un diisocyanate de fonctionnalité sensiblement égale à 2, préférentiellement un isocyanate aromatique, d'un polyol de fonctionnalité sensiblement égale à 2, préférentiellement choisi dans le groupe formé par les polyesters, les polyéthers, les polycarbonates et les mélanges de ces polyols, de masses molaires comprises entre 1000 et 5000, et d'un agent allongeur de chaîne, préférentiellement un diol de masse molaire comprise entre 50 et 500.

5. Membrane d'étanchéité selon l'une quelconque des revendications 1 à 4, **caractérisée en ce que** le polyuréthanne thermoplastique est constitué d'un taux de segments durs compris entre 10 et 40 %.

6. Membrane d'étanchéité selon l'une quelconque des revendications 1 à 5, **caractérisée en ce que** la ou les matières formant les charges est (sont) choisie(s) dans le groupe des charges minérales formé par la craie, la silice, le talc, la dolomie, le kaolin et les mélanges possibles de deux ou plusieurs de ces substances.

7. Procédé de fabrication d'une membrane d'étanchéité selon l'une quelconque des revendications 1 à 6, **caractérisé en ce qu'**il consiste à synthétiser un prépolymère du polyuréthanne thermoplastique, à introduire ledit prépolymère dans le bitume chauffé à une température supérieure à sa température de fusion, à ajouter ensuite au moins l'agent allongeur de chaîne, puis le catalyseur et enfin les autres composants, à chauffer et à agiter le mélange résultant, préférentiellement de manière intermittente, jusqu'à aboutir à une polymérisation complète, pour obtenir une composition présentant une formulation pondérale selon l'une quelconque des revendications 1 à 3, et, enfin, à appliquer la composition bitumineuse modifiée chaude en couche sur un support telle qu'une armature fibreuse, par une ou des opération(s) d'enduction ou d'imprégnation.

8. Procédé de fabrication d'une membrane d'étanchéité selon l'une quelconque des revendications 1 à 6, **caractérisé en ce qu'**il consiste à porter le bitume à sa température de fusion, préférentiellement à 100° C, à ajouter alors le ou les polyol(s) et l'isocyanate destinés à former le polyuréthanne thermoplastique, à agiter le mélange intermédiaire résultant jusqu'à obtention environ du taux de NCO théorique, à ajouter ensuite l'agent allongeur de chaîne, le catalyseur et éventuellement les autres composants, à augmenter progressivemment la température du mélange final jusqu'à environ 180° C, en l'agitant de manière intermittente ou continue, jusqu'à polymérisation complète, pour obtenir une composition présentant une formulation pondérale selon l'une quelconque des revendications 1 à 3 et, enfin, à appliquer la composition bitumineuse modifiée chaude en couche sur un support tel qu'une armature fibreuse, par une ou des opération(s) d'enduction ou d'imprégnation.

9. Procédé selon l'une quelconque des revendications 7 et 8, **caractérisé en ce que** le ratio isocyanate/polyol est compris entre 1,0 et 1,1 et est préférentiellement d'environ 1,05.

## Claims

1. Prefabricated sealing membrane with high resistance to UV and consisting of a support or reinforcement, such as one or several backings that are fibrous or not, coated on at least one surface, and preferably impregnated throughout with a modified bitumen base composition,
**characterised in that**
the thermoplastic bituminous coating and or impregnation composition is a bituminous binder modified by a thermoplastic polyurethane having the following weight proportion:
- 40 to 90% bitumen,
- 10 to 50% thermoplastic polyurethane,
- 0 to 10% aromatic oil,
- 0 to 50% filler,
- 0 to 0.5% catalyst,
and **in that** the thermoplastic polyurethane is deprived of a double carbon-carbon bond and is obtained from a diisocyanate of a functionality of between 2.0 and 2.1, a polyol of a functionality of between 1.95 and 2.05 and which does not contain any ethylenic bonds and a chain elongating agent and
**in that** the modified bituminous binder is capable of being softened under the effect of heat and regains its properties after cooling.

2. Sealing membrane according to claim 1, **characterised in that** the bituminous coating and/or impregnation composition has the following weight proportion:
- 60 to 80% bitumen,
- 15 to 40% thermoplastic polyurethane,
- 0 to 5% aromatic oil,
- 0 to 40% filler,
- 0 to 0.5% catalyst.

3. Sealing membrane according to any one of claims 1 or 2, **characterised in that** the bituminous coating and/or impregnation composition contains also between 0.01 and 20% by weight of one or several additives for improving adhesion, resistance to fire or to flames and/or resistance to the roots of said composition.

4. Sealing membrane according to any one of claims 1 to 3, **characterised in that** the thermoplastic polyurethane is obtained from a diisocyanate of a functionality substantially equal to 2, preferably an aromatic isocyanate, a polyol of functionality substantially equal to 2, preferably selected from a group comprising polyesters, polyethers, polycarbonates and mixtures of these polyols, with molar masses of between 1,000 and 5,000, and a chain elongation agent, preferably a diol with a molar mass of between 50 and 500.

5. Sealing membrane according to any one of claims 1 to 4, **characterised in that** the thermoplastic polyurethane is formed by a quantity of hard segments in an amount of between 10 and 40%.

6. Sealing membrane according to any one of claims 1 to 5, **characterised in that** the material or materials forming the filler is or are selected from a group of mineral fillers formed by chalk, silica, talc, dolomite, kaolin and possible mixtures of two or several of these substances.

7. Method for the production of a sealing membrane according to any one of claims 1 to 6, **characterised in that** it consists of synthesizing a prepolymer of thermoplastic polyurethane, introducing said prepolymer into the bitumen heated to a temperature higher than its melting temperature, then adding at least the chain elongating agent, then the catalyst and finally the other components, heating and agitating the resulting mixture, preferably intermittently, to achieve complete polymerization, to obtain a composition having a weight formulation according to any one of claims 1 to 3, and, finally, applying the hot modified bituminous composition in a layer on a support, such as a fibrous backing by one or more operations of coating or impregnation.

8. Method for the production of a sealing membrane according to any one of claims 1 to 6, **characterised in that** it consists of bringing the bitumen to its melting temperature, preferably to 100°C, then adding the polyol or the polyols and the isocyanate intended to form the thermoplastic polyurethane, agitating the resulting intermediate mixture to obtain an almost the theoretical quantity of NCO, then adding the chain elongating agent, the catalyst and possibly other components, progressively increasing the temperature of the final mixture to about 180°C, agitating the mixture intermittently or continuously, until complete polymerisation, to obtain a composition having a weight proportion according to any one of claims 1 to 3 and, finally, applying the hot modified bituminous composition in a layer on a support such as a fibrous backing, by one or more operations of coating or impregnation.

9. Method according to any one of claims 7 or 8, **characterised in that** the ratio of isocyanate/polyol is between 1.0 and 1.1 and is preferably about 1.05.

## Patentansprüche

1. Fertigdichtmembran, die eine große Stabilität gegen UV aufweist und die aus einem Träger oder einer Verstärkung wie einer oder mehrerer Faserarmierungen oder Nichtfaserarmierungen gebildet ist, der bzw. die auf mindestens einer Seite mit einer Zusammensetzung auf der Basis von modifiziertem Bitumen überzogen und vorzugsweise durchtränkt ist,
wobei die Membran **dadurch gekennzeichnet ist,**
**dass** die bituminöse thermoplastische Zusammensetzung zum Überziehen und/oder zum Tränken ein bituminöses Bindemittel ist, das mit einem thermoplastischen Polyurethan modifiziert wurde und die folgende Gewichtsformel aufweist:
- 40 bis 90% Bitumen,
- 10 bis 50% thermoplastisches Polyurethan,
- 0 bis 10% aromatisches Öl,
- 0 bis 50% füllstoffe,
- 0 bis 0,5% Katalysator,
**dass** das thermoplastische Polyurethan frei von Kohlenstoff-Kohlenstoff-Doppelbindungen ist und ausgehend von einem Diisocyanat mit einer Funktionalität zwischen 2,0 und 2,1, einem Polyol, das eine Funktionalität zwischen 1,95 und 2,05 hat und keine E-thylenbindungen aufweist, und einem Kettenverlängerer gewonnen wird,
und **dass** das bituminöse modifizierte Bindemittel unter der Wärmeeinwirkung erweichbar ist und seine Eigenschaften nach der Abkühlung wiedererlangt.

2. Dichtmembran nach Anspruch 1, **dadurch gekennzeichnet, dass** die bituminöse Zusammensetzung zum Überziehen und/oder zum Tränken die folgende Gewichtsformel aufweist:
- 60 bis 80% Bitumen,
- 15 bis 40% thermoplastisches Polyurethan,
- 0 bis 5% aromatisches Öl,
- 0 bis 40% Füllstoffe,
- 0 bis 0,5% Katalysator.

3. Dichtmembran nach einem der Ansprüche 1 oder 2, **dadurch gekennzeichnet, dass** die bituminöse Zusammensetzung zum \Überziehen und/oder zum Tränken zudem zwischen 0,01 und 20 Gew.% eines oder mehrerer Additive enthält, die die Haftfähigkeit der Zusammensetzung, die Widerstandsfähigkeit der Zusammensetzung gegen Feuer oder Flammen und/oder die Widerstandsfähigkeit der Zusammensetzung gegen Wurzeln verbessern.

4. Dichtmembran nach einem der Ansprüche 1 bis 3, **dadurch gekennzeichnet, dass** das thermoplastische Polyurethan ausgehend von einem Diisocyanat mit einer Funktionalität von ungefähr gleich 2, vorzugsweise einem aromatischen Isocyanat, einem Polyol mit einer Funktionalität von ungefähr gleich 2, das vorzugsweise aus der Gruppe gewählt ist, die aus Polyestern, Polyethern, Polycarbonaten und Mischungen dieser Polyole mit molaren Massen zwischen 1 000 und 5 000 gebildet ist, und einem Kettenverlängerungsmittel, vorzugsweise einem Diol mit einer molaren Masse zwischen 50 und 500, gewonnen wird.

5. Dichtmembran nach einem der Ansprüche 1 bis 4, **dadurch gekennzeichnet, dass** das thermoplastische Polyurethan einen Hartsegmentanteil zwischen 10 und 40% hat.

6. Dichtmembran nach einem der Ansprüche 1 bis 5, **dadurch gekennzeichnet, dass** das oder die Materialien, die die Füllstoffe bilden, aus der Gruppe der Mineralfüllstoffe gewählt sind, die aus Kreide, Kieselerde, Talg, Dolomit, Kaolin und möglichen Mischungen von zwei oder mehreren dieser Substanzen gebildet ist.

7. Verfahren zur Herstellung einer Dichtmembran nach einem der Ansprüche 1 bis 6, **dadurch gekennzeichnet, dass** es umfasst, ein Prepolymer des thermoplastischen Polyurethans zu synthetisieren, das Prepolymer in den auf eine über seinem Schmelzpunkt liegende Temperatur erhitzten Bitumen einzubringen, danach zumindest das Kettenverlängerungsmittel, dann den Katalysator und schließlich die anderen Komponenten hinzuzufügen, das resultierende Gemisch, vorzugsweise in intermittierender Art und Weise, zu heizen und zu rühren, bis sich eine vollständige Polymerisation ergibt, um eine Zusammensetzung zu erhalten, die eine Gewichtsformel gemäß einem der Ansprüche 1 bis 3 aufweist, und schließlich die modifizierte bituminöse Zusammensetzung durch einen oder mehrere Arbeitsschritte zum Überziehen oder Tränken warm als Schicht auf einen Träger wie eine Faserarmierung aufzubringen.

8. Verfahren zur Herstellung einer Dichtmembran nach einem der Ansprüche 1 bis 6, **dadurch gekennzeichnet, dass** es umfasst, den Bitumen auf seine Schmelztemperatur, vorzugsweise auf 100°C, zu bringen, dann das Polyol oder die Polyole und das Isocyanat, die das thermoplastische Polyurethan bilden sollen, hinzuzufügen, das resultierende Zwischengemisch zu rühren bis man ungefähr den theoretischen NCO-Gehalt erhält, anschließend das Kettenverlängerungsmittel, den Katalysator und eventuell die anderen Komponenten hinzuzufügen, nach und nach die Temperatur des Endgemisches auf ungefähr 180°C zu erhöhen, wobei es in intermittierender oder kontinuierlicher Art und Weise bis zur vollständigen Polymerisation gerührt wird, um eine Zusammensetzung zu erhalten, die eine Gewichtsformel nach einem der Ansprüche 1 bis 3 aufweist, und schließlich die modifizierte bituminöse Zusammensetzung durch einen oder mehrere Arbeitsschritte zum Überziehen oder Tränken warm als Schicht auf einen Träger wie eine Faserarmierung aufzubringen.

9. Verfahren nach einem der Ansprüche 7 oder 8, **dadurch gekennzeichnet, dass** das Verhältnis von Isocyanat zu Polyol zwischen 1,0 und 1,1 liegt und vorzugsweise ungefähr 1,05 ist.
